# EUROPEAN PATENT SPECIFICATION

(11) **EP 4 253 115 B1**
(45) Date of publication and mention of the grant of the patent: **15.04.2026**
(21) Application number: 21897057.2
(22) Date of filing: 25.11.2021
(51) Int. Cl.: B60K 6/36, B60K 6/50

(54) **HYBRID POWER DRIVING SYSTEM AND HYBRID POWER VEHICLE**
HYBRIDANTRIEBSSYSTEM UND HYBRIDANTRIEBSFAHRZEUG
SYSTÈME D'ENTRAÎNEMENT À ÉNERGIE HYBRIDE ET VÉHICULE À ÉNERGIE HYBRIDE

(30) Priority: 25.11.2020 CN 202011339406
(43) Date of publication of application: 04.10.2023
(73) Proprietor: China Faw Co., Ltd., Changchun, Jilin 130011 (CN)
(72) Inventor: WANG, Nan, Changchun, Jilin 130011 (CN); LIANG, Guiyou, Changchun, Jilin 130011 (CN); WANG, Zhiming, Changchun, Jilin 130011 (CN); ZHAO, Xuesong, Changchun, Jilin 130011 (CN); YANG, Yang, Changchun, Jilin 130011 (CN)
(74) Representative: Berggren Oy
(86) International application number: PCT/CN2021/132989
(87) International publication number: WO 2022/111557

(56) References cited:
- CN-A- 110 834 532
- CN-A- 110 834 532
- CN-A- 111 098 688
- CN-A- 111 098 688
- CN-A- 111 319 448
- CN-A- 111 674 255
- CN-A- 111 775 685
- CN-A- 112 389 185
- JP-A- 2020 044 958
- US-A1- 2003 153 428

## Description

### Cross-Reference to Related Application(s)

The present invention claims priority to Chinese Patent Application No. 202011339406.4, filed on November 25, 2020 and entitled "Hybrid drive system and hybrid vehicle".

### Technical Field

The present invention relates to the technical field of vehicles, in particular to a hybrid drive system and a hybrid vehicle.

### Background

In most cases, a hybrid transmission based on an automatic transmission is improved with one motor added between an engine and the transmission or connected in parallel to one gear of the automatic transmission, so as to achieve the functions of all-electric drive, braking energy recovery, acceleration and torque increase, etc.

In this way, the hybrid transmission still has to be regulated and achieves shift gears by switching double clutches, instead of by the motor, and the problems of low shifting quality and high software control difficulty still exist. In addition, despite the way that the ordinary automatic transmission has been upgraded to a hybrid transmission, it is impossible for the engine to frequently operate in a fuel efficient area, making the range of reduction of fuel consumption small, a hybrid drive modeless activated, and more fuel-saving modes is impossible to achieve. Besides, for a dual-motor hybrid mode newly emerging on the market, dual motors are horizontally arranged on a complete vehicle in a highly compact manner due to limited horizontal space of the complete vehicle, which limits torque-increasing space, increases design and production difficulty of corresponding parts, and leads to high production cost.

Examples of a driving device of hybrid vehicle and hybrid vehicle according to the prior art are known from CN111674255A.

### Summary

An objective of the present invention is to provide a hybrid drive system and a hybrid vehicle, which solve the problems of transmission performance and reliability caused by frequent gear shifting, and reduce machining difficulty.

The invention is set out in the appended set of claims.

In order to achieve the objective, the present invention uses the following technical solution:
A hybrid drive system includes:
an engine, a first shaft and a second shaft, wherein a first end of the first shaft is connected to the engine and a second end of the first shaft is selectively connected to the second shaft;
a third shaft, wherein the third shaft, the second shaft and the first shaft are coaxially arranged;
a fourth shaft and a fifth shaft, wherein the fourth shaft is connected to the fifth shaft;
a sixth shaft, wherein the sixth shaft, the fourth shaft and the second shaft are arranged in parallel at intervals;
a first gear pair, a second gear pair and a first synchronization mechanism, wherein the first gear pair and the second gear pair are located between the second shaft and the fourth shaft, and the first synchronization mechanism is configured to selectively abut against the first gear pair and the second gear pair, so as to convert rotation of the second shaft into rotation of the fourth shaft;
a third gear pair, a fourth gear pair, a second synchronization mechanism and a third synchronization mechanism, wherein the third gear pair is located between the fifth shaft and the third shaft, the fourth gear pair is located between the fifth shaft and the sixth shaft, and the third synchronization mechanism is configured to selectively abut against the fourth gear pair, so as to convert rotation of the fifth shaft into rotation of the sixth shaft;
a first differential mechanism, a first drive shaft and rear wheels, wherein the first differential mechanism is connected to the third shaft, and the first differential mechanism is configured to drive, by the first drive shaft, the rear wheels to rotate;
a second differential mechanism, a second drive shaft and front wheels, wherein the second differential mechanism is connected to the sixth shaft, and the second differential mechanism is configured to drive, by the second drive shaft, the front wheels to rotate; and
a first motor and a second motor, wherein the first motor is connected to the second shaft, the second motor is connected to the fifth shaft, the engine drives, by the first shaft, the second shaft to rotate for power generation of the first motor, and the first motor is able to transfer stored electric energy to the second motor, so as to cause the second motor to drive the fifth shaft to rotate; and
a clutch mechanism, wherein the clutch mechanism comprises a driving portion and a driven portion, the driving portion is connected to the first shaft, the driven portion is connected to the second shaft, and the driving portion and the driven portion are able to selectively abut against each other;
wherein the hybrid drive system has fifteen modes as follows: a vehicle front wheel engine drive and engine power generation mode, a vehicle rear wheel engine drive and engine power generation mode, a vehicle four-wheel engine drive and engine power generation mode, a vehicle front wheel all-electric drive and engine power generation mode, a vehicle rear wheel all-electric drive and engine power generation mode, a vehicle four-wheel all-electric drive and engine power generation mode, a vehicle front wheel all-electric drive and engine non-power-generation mode, a vehicle rear wheel all-electric drive and engine non-power-generation mode, a vehicle extrication mode, a vehicle four-wheel all-electric drive and engine non-power-generation mode, a vehicle front wheel hybrid drive and engine power generation mode, a vehicle rear wheel hybrid drive and engine power generation, a vehicle four-wheel hybrid drive and engine power generation mode, a vehicle backing and engine non-power-generation mode and a vehicle stationary and engine power generation mode;
the hybrid drive system further comprises a fifth gear pair, and the fifth gear pair is located between the fifth shaft and the third shaft, the second synchronization mechanism is configured to selectively abut against the third gear pair and the fifth gear pair, so as to convert rotation of the fifth shaft into rotation of the third shaft;
wherein the fifth gear pair comprises a fifth driving gear and a fifth driven gear, the fifth shaft penetrates the fifth driving gear, the fifth driving gear meshes with the fifth driven gear, the fifth driven gear sleeves the third shaft and is able to rotate relative to the third shaft, and the second synchronization mechanism is configured to selectively abut against the fifth driven gear;
when the hybrid drive system is in the vehicle extrication mode, the engine does not operate, the driving portion and the driven portion of the clutch mechanism are disconnected from each other, and the first motor does not generate power, drive force of the second motor is transmitted to the third shaft by the fifth gear pair, and the second synchronization mechanism engages with the fifth driven gear, and the drive force drives, by the first differential mechanism and the first drive shaft, the rear wheels to rotate, and therefore extricate a vehicle.

In some embodiments, the first gear pair includes a first driving gear and a first driven gear, the second shaft penetrates the first driving gear, the first driving gear meshes with the first driven gear, the first driven gear sleeves the fourth shaft and is able to rotate relative to the fourth shaft, and the first synchronization mechanism is configured to selectively abut against the first driven gear.

In some embodiments, the second gear pair includes a second driving gear and a second driven gear, the second shaft penetrates the second driving gear, the second driving gear meshes with the second driven gear, the second driven gear sleeves the fourth shaft and is able to rotate relative to the fourth shaft, and the first synchronization mechanism is configured to selectively abut against the second driven gear.

In some embodiments, the third gear pair includes a third driving gear and a third driven gear, the fifth shaft penetrates the third driving gear, the third driving gear meshes with the third driven gear, the third driven gear sleeves the third shaft and is able to rotate relative to the third shaft, and the second synchronization mechanism is configured to selectively abut against the third driven gear.

In some embodiments, the fourth gear pair includes a fourth driving gear and a fourth driven gear, the fifth shaft penetrates the fourth driving gear, the fourth driving gear meshes with the fourth driven gear, the fourth driven gear sleeves the sixth shaft and is able to rotate relative to the sixth shaft, and the third synchronization mechanism is configured to selectively abut against the fourth driven gear.

In some embodiments, the first synchronization mechanism is arranged between the first driven gear and the second driven gear.

In some embodiments, the second synchronization mechanism is arranged between the third driven gear and the fifth driven gear.

In order to achieve the above objective, the present invention further provides a hybrid vehicle including the above hybrid drive system.

### Brief Description of the Drawings

Fig. 1 is a schematic diagram of a principle of a hybrid drive system of the present invention; and
Fig. 2 is a structural schematic diagram of a hybrid drive system of the present invention.

In the figures:
1. first shaft; 2. second shaft; 3. third shaft; 4. fourth shaft; 5. fifth shaft; 6. sixth shaft; 7. first synchronization mechanism; 8. third synchronization mechanism; 9. second synchronization mechanism;
10. first gear pair; 10a. first driving gear; 10b. first driven gear;
20. second gear pair; 20a. second driving gear; 20b. second driven gear;
30. third gear pair; 30b. third driven gear;
40. fourth gear pair; 40b. fourth driven gear;
50. fifth gear pair; 50a. fifth driving gear; 50b. fifth driven gear;
60. clutch mechanism; 60a. driving portion; 60b, driven portion;
61. first differential mechanism; 62. first drive shaft; 63. rear wheel; 64. second differential mechanism; 65. second drive shaft; 66. front wheel;
70. first motor; 80. second motor; 90. engine;
11. first left bearing; 12. first right bearing;
21. second left bearing; 22. second right bearing;
31. third left bearing; 32. third right bearing; 33. third inner left bearing; 34. third inner right bearing;
41. fourth left bearing; 42. fourth right bearing; 43. fourth inner left bearing; 44. fourth inner right bearing;
51. fifth left bearing; 52. fifth intermediate bearing; 53. fifth right bearing;
61. sixth left bearing; 62. sixth right bearing; and 63. sixth inner bearing.

### Detailed Description of the Embodiments

To make technical problems solved, technical solutions used, and technical effects achieved by the present invention clearer, the technical solutions in embodiments of the present invention will be further described in detail below with reference to accompanying drawings. Apparently, the described embodiments are merely some rather than all of the embodiments of the present invention.

In the present invention, unless otherwise explicitly specified and defined, the terms "connecting", "connection", "fixing", etc. should be understood in a broad sense, for example, they may be a fixed connection, a detachable connection, or an integrated connection; may be a mechanical connection or an electric connection; and may be a direct connection, or an indirect connection via an intermediate medium, internal communication of two elements or interaction between the two elements. For those of ordinary skill in the art, the specific meaning of the above terms in the present invention could be understood according to specific circumstances.

In the present invention, unless otherwise specified and limited, a first feature "above" or "below" a second feature indicates that the first feature may be in direct contact with the second feature, or in indirect contact with the second feature by another feature therebetween. Further, the first feature "above", "over" and "on a top of" the second feature indicates that the first feature is over and obliquely above the second feature, or merely indicates that the first feature is higher than the second feature in horizontal height. The first feature "below", "under" and "on a bottom of" the second feature indicates that the first feature may be under the second feature and obliquely below the second feature, or merely indicates that the first feature is smaller than the second feature in horizontal height.

The technical solution of the present invention will be further described below with reference to the accompanying drawings and in conjunction with specific embodiments.

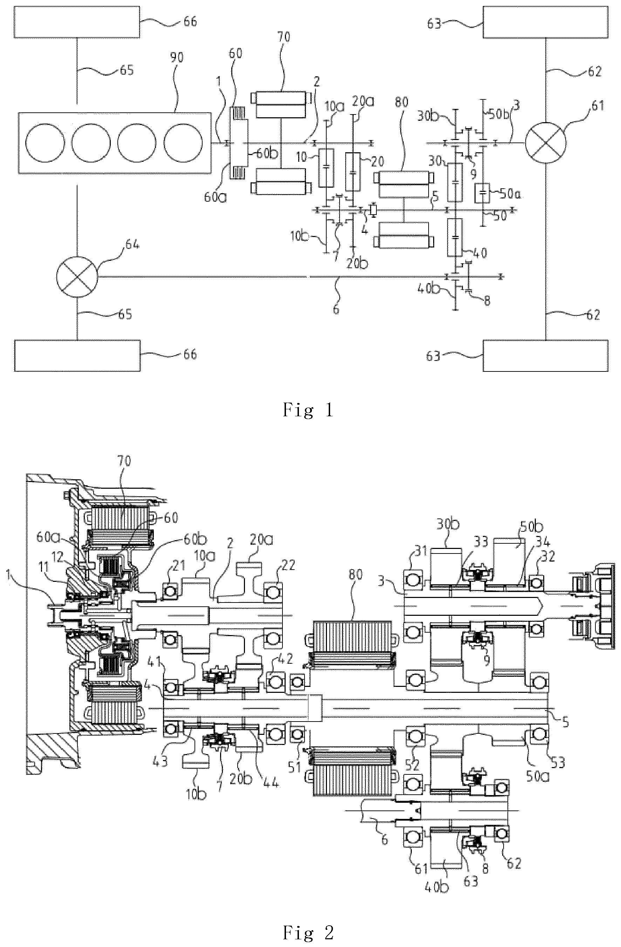

This embodiment provides a hybrid drive system, which is applied to a hybrid vehicle. As shown in Fig. 1, the hybrid drive system includes an engine 90, a first shaft 1, a second shaft 2, a third shaft 3, a fourth shaft 4, a fifth shaft 5 and a sixth shaft 6. A first end of the first shaft 1 is connected to the engine 90 and a second end of the first shaft is selectively connected to the second shaft 2. The third shaft 3, the second shaft 2 and the first shaft 1 are coaxially arranged, the fourth shaft 4 is connected to the fifth shaft 5, and the sixth shaft 6, the fourth shaft 4 and the second shaft 2 are arranged in parallel at intervals. The first shaft 1, the second shaft 2, the third shaft 3, the fourth shaft 4, the fifth shaft 5 and the sixth shaft 6 are arranged parallel to one another, the first shaft 1, the second shaft 2 and the third shaft 3 are coaxially arranged, the fourth shaft 4 and the fifth shaft 5 are coaxially arranged, and the sixth shaft 6 is independently arranged on a straight line, such that the hybrid drive system is longitudinally arranged on a complete vehicle, the problem that an axial space of a transmission device is limited is solved, the structure is compact, production difficulty of parts is lowered, and production cost is reduced.

Further, the hybrid drive system further includes a first motor 70 and a second motor 80, where the first motor 70 is connected to the second shaft 2, the second motor 80 is connected to the fifth shaft 5, the engine 90 drives, by the first shaft 1, the second shaft 2 to rotate for power generation by the first motor 70, and the first motor 70 is able to transfer stored electric energy to the second motor 80, so as to cause the second motor 80 to drive the fifth shaft 5 to rotate. According to the hybrid drive system provided by this embodiment, by setting the engine 90, the first motor 70 and the second motor 80, multi-gear design of a traditional transmission is omitted, the engine 90 continuously drives the first motor 70 to generate power, the first motor 70 provides sufficient electric energy for the second motor 80, and by speed-adjustable drive by the second motor 80, the problems of short battery life and long charging time of electric vehicles are solved.

Further, the hybrid drive system further includes a first gear pair 10, a second gear pair 20, a first synchronization mechanism 7, a third gear pair 30, a fourth gear pair 40, a fifth gear pair 50, a second synchronization mechanism 9, a third synchronization mechanism 8, a first differential mechanism 61, a first drive shaft 62, rear wheels 63, a second differential mechanism 64, a second drive shaft 65 and front wheels 66.

The first gear pair 10 and the second gear pair 20 are located between the second shaft 2 and the fourth shaft 4, and the first synchronization mechanism 7 is configured to selectively abut against the first gear pair 10 and the second gear pair 20, so as to convert rotation of the second shaft 2 into rotation of the fourth shaft 4. The first synchronization mechanism 7 is configured to be able to selectively abut against the first gear pair 10 and the second gear pair 20, so as to convert rotation of the second shaft 2 into rotation of the fourth shaft 4, and two gears are arranged to guarantee that the second motor 80 in an optimal operation range, which is conducive to improvement of efficiency of the second motor 80.

The third gear pair 30 and the fifth gear pair 50 are located between the fifth shaft 5 and the third shaft 3, the second synchronization mechanism 9 is configured to selectively abut against the third gear pair 30 and the fifth gear pair 50, so as to convert rotation of the fifth shaft 5 into rotation of the third shaft 3, the fourth gear pair 40 is located between the fifth shaft 5 and the sixth shaft 6, and the third synchronization mechanism 8 is configured to selectively abut against the fourth gear pair 40, so as to convert rotation of the fifth shaft 5 into rotation of the sixth shaft 6. The first differential mechanism 61 is connected to the third shaft 3, and the first differential mechanism 61 is configured to drive the rear wheels 63 to rotate by the first drive shaft 62, so as to drive the rear wheels 63. The second differential mechanism 64 is connected to the sixth shaft 6 and the second differential mechanism 64 is configured to drive, by the second drive shaft 65, the front wheels 66 to rotate, so as to drive the front wheels 66.

The hybrid drive system has fifteen modes as follows: a vehicle front wheel engine drive and engine power generation mode, a vehicle rear wheel engine drive and engine power generation mode, a vehicle four-wheel engine drive and engine power generation mode, a vehicle front wheel all-electric drive and engine power generation mode, a vehicle rear wheel all-electric drive and engine power generation mode, a vehicle four-wheel all-electric drive and engine power generation mode, a vehicle front wheel all-electric drive and engine non-power-generation mode, a vehicle rear wheel all-electric drive and engine non-power-generation mode, a vehicle extrication mode, a vehicle four-wheel all-electric drive and engine non-power-generation mode, a vehicle front wheel hybrid drive and engine power generation mode, a vehicle rear wheel hybrid drive and engine power generation, a vehicle four-wheel hybrid drive and engine power generation mode, a vehicle backing and engine non-power-generation mode and a vehicle stationary and engine power generation mode.

In the hybrid drive system, whether the engine 90 participates in driving at a high speed or does not participate in driving at a low speed, the engine 90 is in a most economical operation mode, which greatly reduces fuel consumption and is economical. Moreover, the hybrid drive system may achieve switching among separate front wheel drive, separate rear wheel drive and four-wheel drive, which may achieve more fuel-saving modes due to various hybrid drive modes.

To switch the engine 90 between an operation state and a disconnected state, as shown in Fig. 1, the hybrid drive system further includes a clutch mechanism 60, the clutch mechanism 60 includes a driving portion 60a and a driven portion 60b, the driving portion 60a is connected to the first shaft 1, the driven portion 60b is connected to the second shaft 2, and the driving portion 60a and the driven portion 60b are able to selectively abut against each other. When the driving portion 60a and the driven portion 60b abut against each other, the engine 90 drives the first shaft 1 to rotate, and drives the second shaft 2 to rotate by the driving portion 60a and the driven portion 60b, thereby outputting power from the engine 90. When the driving portion 60a and the driven portion 60b are disconnected from each other, the engine 90 drives the first shaft 1 to rotate, and the driving portion 60a and the driven portion 60b are disconnected from each other, so as to cut power from the engine 90.

In the embodiments, the first gear pair 10 includes a first driving gear 10a and a first driven gear 10b, the second shaft 2 penetrates the first driving gear 10a, the first driving gear 10a meshes with the first driven gear 10b, and the first driven gear 10b sleeves the fourth shaft 4 and is able to rotate relative to the fourth shaft 4. The second gear pair 20 includes a second driving gear 20a and a second driven gear 20b, the second shaft 2 penetrates the second driving gear 20a, the second driving gear 20a meshes with the second driven gear 20b, the second driven gear 20b sleeves the fourth shaft 4 and is able to rotate relative to the fourth shaft 4, the first synchronization mechanism 7 is arranged between the first driven gear 10b and the second driven gear 20b, and the first synchronization mechanism 7 is configured to selectively abut against the first driven gear 10b and the second driven gear 20b, so as to achieve switching between two gears.

Further, the third gear pair 30 includes a third driving gear and a third driven gear 30b, the fifth shaft 5 penetrates the third driving gear, the third driving gear meshes with the third driven gear 30b, the third driven gear 30b sleeves the third shaft 3 and is able to rotate relative to the third shaft 3, the fifth gear pair 50 includes a fifth driving gear 50a and a fifth driven gear 50b, and the fifth shaft 5 penetrates the fifth driving gear 50a. The fifth driving gear 50a meshes with the fifth driven gear 50b, the fifth driven gear 50b sleeves the third shaft 3 and is able to rotate relative to the third shaft 3. The second synchronization mechanism 9 is arranged between the third driven gear 30b and the fifth driven gear 50b. The second synchronization mechanism 9 is configured to selectively abut against the third driven gear 30b and the fifth driven gear 50b, so as to switch the two gears, and drive the rear wheels 63.

In some embodiments, the fourth gear pair 40 includes a fourth driving gear and a fourth driven gear 40b, the fifth shaft 5 penetrates the fourth driving gear, the fourth driving gear meshes with the fourth driven gear 40b, the fourth driven gear 40b sleeves the sixth shaft 6 and may rotate relative to the sixth shaft 6, and the third synchronization mechanism 8 is configured to selectively abut against the fourth driven gear 40b, so as to drive the front wheels 66. It may be understood that the third driving gear and the fourth driving gear may be arranged separately, or may share the same gear.

As shown in Fig. 2, a first end and a second end of the first shaft 1 are fixed to a machine body by a first left bearing 11 and a first right bearing 12 respectively. A first end and a second end of the second shaft 2 are fixed by a second left bearing 21 and a second right bearing 22. A first end and a second end of the third shaft 3 are fixed by a third left bearing 31 and a third right bearing 32, the second synchronization mechanism 9 is fixed at a middle position of the third shaft 3, a first side and a second side of the second synchronization mechanism 9 are provided with a third driven gear 30b and a fifth driven gear 50b respectively, and a third inner left bearing 33 is placed in a cavity defined by the third driven gear 30b and the third shaft 3, such that the third driven gear 30b is able to rotate relatively freely on the third shaft 3. A third inner right bearing 34 is placed in a cavity defined by the fifth driven gear 50b and the third shaft 3, such that the fifth driven gear 50b is able to rotate relatively freely on the third shaft 3.

A first end and a second end of the fourth shaft 4 are fixed by a fourth left bearing 41 and a fourth right bearing 42, and the first synchronization mechanism 7 is fixed at a middle position of the fourth shaft 4. A first side and a second side of the first synchronization mechanism 7 are separately provided with the first driven gear 10b and the second driven gear 20b, and a fourth inner left bearing 43 is placed in a cavity defined by the first driven gear 10b and the fourth shaft and a fourth inner right bearing 44 is placed in a cavity defined by the second driven gear 20b and the fourth shaft 4, such that the first driven gear 10b and the second driven gear 20b are able to rotate relatively freely on the fourth shaft 4. A first end and a second end of the fifth shaft 5 are fixed by a fifth left bearing 51 and a fifth right bearing 53, and a fifth intermediate bearing 52 is arranged at a middle position of the fifth shaft 5. A first end and a second end of the sixth shaft 6 are fixed by a sixth left bearing 61 and a sixth right bearing 62, the third synchronization mechanism 8 is fixed on a side of the fourth driven gear 40b, and the sixth inner bearing 63 is placed in a cavity defined by the fourth driven gear 40b and the sixth shaft 6, such that the fourth driven gear 40b is able to rotate relatively freely on the sixth shaft 6.

An operation process of the hybrid drive system provided by this embodiment is as follows:

### I. A vehicle front wheel engine drive and engine power generation mode

The engine 90 is in the operation state, the driving portion 60a and the driven portion 60b of the clutch mechanism 60 are in a connected state, and the engine 90 drives the first motor 70 to generate power. One of the first driven gear 10b and the second driven gear 20b engages with the first synchronization mechanism 7, drive force of the engine 90 is transmitted to the fourth shaft 4 by the first gear pair 10 or the second gear pair 20, the fourth shaft 4 drives the fifth shaft 5 to rotate, and then the drive force is transmitted to the sixth shaft 6 by the fourth gear pair 40. The third synchronization mechanism 8 engages with the fourth driven gear 40b, and the drive force drives, by the second differential mechanism 64 and the second drive shaft 65, the front wheels 66 to rotate. In this process, the second motor 80 only rotates along with the fifth shaft 5, and plays a servo role, and the second motor 80 does not generate drive force.

### II. A vehicle rear wheel engine drive and engine power generation mode

The engine 90 is in the operation state, the driving portion 60a and the driven portion 60b of the clutch mechanism 60 are connected to each other, and the engine 90 drives the first motor 70 to generate power. One of the first driven gear 10b and the second driven gear 20b engages with the first synchronization mechanism 7, drive force of the engine 90 is transmitted to the fourth shaft 4 by the first gear pair 10 or the second gear pair 20, the fourth shaft 4 drives the fifth shaft 5 to rotate, and then the drive force is transmitted to the third shaft 3 by the third gear pair 30. The second synchronization mechanism 9 engages with the third driven gear 30b, and the drive force drives, by the first differential mechanism 61 and the first drive shaft 62, the rear wheels 63 to rotate. In this process, the second motor 80 only rotates along with the fifth shaft 5, and plays a servo role, and the second motor 80 does not generate drive force.

### III. A vehicle four-wheel engine drive and engine power generation mode

The engine 90 is in the operation state, the driving portion 60a and the driven portion 60b of the clutch mechanism 60 are connected to each other, and the engine 90 drives the first motor 70 to generate power. One of the first driven gear 10b and the second driven gear 20b engages with the first synchronization mechanism 7, drive force of the engine 90 is transmitted to the fourth shaft 4 by the first gear pair 10 or the second gear pair 20, the fourth shaft 4 drives the fifth shaft 5 to rotate, and then the drive force is transmitted to the third shaft 3 by the third gear pair 30. The second synchronization mechanism 9 engages with the third driven gear 30b, the drive force drives the rear wheels 63 to rotate by the first differential mechanism 61 and the first drive shaft 62. In addition, the drive force is transmitted to the sixth shaft 6 by the fourth gear pair 40, the third synchronization mechanism 8 engages with the fourth driven gear 40b, and the drive force drives, by the second differential mechanism 64 and the second drive shaft 65, the front wheels 66 to rotate, thus achieving rotation of four wheels. In this process, the second motor 80 only rotates along with the fifth shaft 5, and plays a servo role, and the second motor 80 does not generate drive force.

### IV. A vehicle front wheel all-electric drive and engine power generation mode

The engine 90 is in the operation state, the driving portion 60a and the driven portion 60b of the clutch mechanism 60 are connected to each other, and the engine 90 drives the first motor 70 to generate power. The first synchronization mechanism 7 does not engage with the first driven gear 10b or the second driven gear 20b, such that the first driving gear 10a and the second driving gear 20a respectively drive the first driven gear 10b and the second driven gear 20b to idle on the fourth shaft 4, and the drive force of the engine 90 is not transmitted to the fourth shaft 4 by the first gear pair 10 or the second gear pair 20.

The second motor 80 uses stored electric energy to generate drive force, and then transmits the drive force to the sixth shaft 6 by the fourth gear pair 40. The third synchronization mechanism 8 engages with the fourth driven gear 40b, and the drive force drives, by the second differential mechanism 64 and the second drive shaft 65, the front wheels 66 to rotate.

### V. A vehicle rear wheel all-electric drive and engine power generation mode

The engine 90 is in the operation state, the driving portion 60a and the driven portion 60b of the clutch mechanism 60 are connected to each other, and the engine 90 drives the first motor 70 to generate power. The first synchronization mechanism 7 does not engage with the first driven gear 10b or the second driven gear 20b, such that the first driving gear 10a and the second driving gear 20a respectively drive the first driven gear 10b and the second driven gear 20b to idle on the fourth shaft 4, and the drive force of the engine 90 is not transmitted to the fourth shaft 4 by the first gear pair 10 or the second gear pair 20.

The second motor 80 uses stored electric energy to generate drive force, and then transmits the drive force to the third shaft 3 by the third gear pair 30. The second synchronization mechanism 9 engages with the third driven gear 30b, and the drive force drives, by the first differential mechanism 61 and the first drive shaft 62, the rear wheels 63 to rotate.

### VI. A vehicle four-wheels all-electric drive and engine power generation mode

The engine 90 is in the operation state, the driving portion 60a and the driven portion 60b of the clutch mechanism 60 are connected to each other, and the engine 90 drives the first motor 70 to generate power. The first synchronization mechanism 7 does not engage with the first driven gear 10b or the second driven gear 20b, such that the first driving gear 10a and the second driving gear 20a respectively drive the first driven gear 10b and the second driven gear 20b to idle on the fourth shaft 4, and the drive force of the engine 90 is not transmitted to the fourth shaft 4 by the first gear pair 10 or the second gear pair 20.

The second motor 80 uses stored electric energy to generate drive force, and then transmits the drive force to the sixth shaft 6 by the fourth gear pair 40. The third synchronization mechanism 8 engages with the fourth driven gear 40b, and the drive force drives, by the second differential mechanism 64 and the second drive shaft 65, the front wheels 66 to rotate. In addition, the drive force is transmitted to the third shaft 3 by the third gear pair 30, the second synchronization mechanism 9 engages with the third driven gear 30b, and the drive force drives, by the first differential mechanism 61 and the first drive shaft 62, the rear wheels 63 to rotate.

### VII. A vehicle front wheel all-electric drive and engine non-power-generation mode

The engine 90 does not operate, the driving portion 60a and the driven portion 60b of the clutch mechanism 60 are disconnected from each other, and the motor does not generate power.

The second motor 80 uses stored electric energy to generate drive force, and then transmits the drive force to the sixth shaft 6 by the fourth gear pair 40. The third synchronization mechanism 8 engages with the fourth driven gear 40b, and the drive force drives, by the second differential mechanism 64 and the second drive shaft 65, the front wheels 66 to rotate.

### VIII. A vehicle rear wheel all-electric drive and engine non-power-generation mode

The engine 90 does not operate, the driving portion 60a and the driven portion 60b of the clutch mechanism 60 are disconnected from each other, and the motor does not generate power.

The second motor 80 uses stored electric energy to generate drive force, and then transmits the drive force to the third shaft 3 by the third gear pair 30. The second synchronization mechanism 9 engages with the third driven gear 30b, and the drive force drives, by the first differential mechanism 61 and the first drive shaft 62, the rear wheels 63 to rotate.

### IX. A vehicle extrication mode which features that the rear wheels of the vehicle are driven by all-electricity and the engine 90 does not generate power, and is special to a vehicle extricating operation condition

The engine 90 does not operate, the driving portion 60a and the driven portion 60b of the clutch mechanism 60 are disconnected from each other, and the motor does not generate power.

The second motor 80 uses stored electric energy to generate drive force, and then transmits the drive force to the third shaft 3 by the fifth gear pair 50. The second synchronization mechanism 9 engages with the fifth driven gear 50b, and the drive force drives, by the first differential mechanism 61 and the first drive shaft 62, the rear wheels 63 to rotate, and therefore extricate a vehicle.

### X. A vehicle four-wheel all-electric drive and engine non-power-generation mode

The engine 90 does not operate, the driving portion 60a and the driven portion 60b of the clutch mechanism 60 are disconnected from each other, and the motor does not generate power.

The second motor 80 uses stored electric energy to generate drive force, and then transmits the drive force to the sixth shaft 6 by the fourth gear pair 40. The third synchronization mechanism 8 engages with the fourth driven gear 40b, and the drive force drives, by the second differential mechanism 64 and the second drive shaft 65, the front wheels 66 to rotate. In addition, the drive force is transmitted to the third shaft 3 by the third gear pair 30. The second synchronization mechanism 9 engages with the third driven gear 30b, and the drive force drives, by the first differential mechanism 61 and the first drive shaft 62, the rear wheels 63 to rotate and therefore achieve rotation of four wheels.

### XI. A vehicle front wheel hybrid drive and engine power generation mode

The engine 90 is in the operation state, the driving portion 60a and the driven portion 60b of the clutch mechanism 60 are connected to each other, and the engine 90 drives the first motor 70 to generate power. One of the first driven gear 10b and the second driven gear 20b engages with the first synchronization mechanism 7, drive force of the engine 90 is transmitted to the fourth shaft 4 by the first gear pair 10 or the second gear pair 20, the fourth shaft 4 drives the fifth shaft 5 to rotate, and then the drive force is transmitted to the sixth shaft 6 by the fourth gear pair 40. The third synchronization mechanism 8 engages with the fourth driven gear 40b, and the drive force drives, by the second differential mechanism 64 and the second drive shaft 65, the front wheels 66 to rotate.

The second motor 80 uses stored electric energy to generate drive force, and then transmits the drive force to the sixth shaft 6 by the fourth gear pair 40. The third synchronization mechanism 8 engages with the fourth driven gear 40b, and the drive force drives, by the second differential mechanism 64 and the second drive shaft 65, the front wheels 66 to rotate.

### XII. A vehicle rear wheel hybrid drive and engine power generation

The engine 90 is in the operation state, the driving portion 60a and the driven portion 60b of the clutch mechanism 60 are connected to each other, and the engine 90 drives the first motor 70 to generate power. One of the first driven gear 10b and the second driven gear 20b engages with the first synchronization mechanism 7, drive force of the engine 90 is transmitted to the fourth shaft 4 by the first gear pair 10 or the second gear pair 20, the fourth shaft 4 drives the fifth shaft 5 to rotate, and then the drive force is transmitted to the third shaft 3 by the third gear pair 30. The second synchronization mechanism 9 engages with the third driven gear 30b, and the drive force drives, by the first differential mechanism 61 and the first drive shaft 62, the rear wheels 63 to rotate.

The second motor 80 uses stored electric energy to generate drive force, and then transmits the drive force to the third shaft 3 by the third gear pair 30. The second synchronization mechanism 9 engages with the third driven gear 30b, and the drive force drives, by the first differential mechanism 61 and the first drive shaft 62, the rear wheels 63 to rotate.

### XIII. A vehicle four-wheel hybrid drive and engine power generation mode

The engine 90 is in the operation state, the driving portion 60a and the driven portion 60b of the clutch mechanism 60 are connected to each other, and the engine 90 drives the first motor 70 to generate power. One of the first driven gear 10b and the second driven gear 20b engages with the first synchronization mechanism 7, drive force of the engine 90 is transmitted to the fourth shaft 4 by the first gear pair 10 or the second gear pair 20, the fourth shaft 4 drives the fifth shaft 5 to rotate, and then the drive force is transmitted to the sixth shaft 6 by the fourth gear pair 40. The third synchronization mechanism 8 engages with the fourth driven gear 40b, and the drive force drives, by the second differential mechanism 64 and the second drive shaft 65, the front wheels 66 to rotate. The drive force is transmitted to the third shaft 3 by the third gear pair 30. The second synchronization mechanism 9 engages with the third driven gear 30b, and the drive force drives, by the first differential mechanism 61 and the first drive shaft 62, the rear wheels 63 to rotate.

The second motor 80 uses stored electric energy to generate drive force, and then transmits the drive force to the sixth shaft 6 by the fourth gear pair 40. The third synchronization mechanism 8 engages with the fourth driven gear 40b, and the drive force drives, by the second differential mechanism 64 and the second drive shaft 65, the front wheels 66 to rotate. The drive force is transmitted to the third shaft 3 by the third gear pair 30. The second synchronization mechanism 9 engages with the third driven gear 30b, and the drive force drives, by the first differential mechanism 61 and the first drive shaft 62, the rear wheels 63 to rotate.

### XlV. A vehicle backing and engine non-power-generation mode

The second motor 80 uses stored electric energy to generate reverse drive force, and transmits the reverse drive force to the third shaft 3 by the third gear pair 30. The second synchronization mechanism 9 engages with the third driven gear 30b, and the drive force drives the rear wheels 63 by the first differential mechanism 61 and the first drive shaft 62, so as to achieve a backing function.

### XV. A vehicle stationary and engine power generation mode

The engine 90 is in the operation state, the driving portion 60a and the driven portion 60b of the clutch mechanism 60 are connected to each other, and in this case, the engine 90 drives the first motor 70 to generate power. The first synchronization mechanism 7 does not engage with the first driven gear 10b or the second driven gear 20b, such that the first driving gear 10a and the second driving gear 20a respectively drive the first driven gear 10b and the second driven gear 20b to idle on the fourth shaft 4, and the drive force of the engine 90 is not transmitted to the fourth shaft 4, such that the sixth shaft 6 does not transmit drive force to the second differential mechanism 64 and does not drive the front wheels 66. The third shaft 3 does not transmit drive force to the first differential mechanism 61, does not drive the rear wheels 63. In this process, the second motor 80 does not operate or generate drive force, and does not drive the rear wheels 63 as a result.

According to the hybrid drive system provided by the present invention, the first shaft, the second shaft, the third shaft, the fourth shaft, the fifth shaft and the sixth shaft are arranged parallel to one another, the first shaft, the second shaft and the third shaft are coaxially arranged, the fourth shaft and the fifth shaft are coaxially arranged, and the sixth shaft is independently arranged on a straight line, such that the hybrid drive system is longitudinally arranged on the whole vehicle, the problem of limited axial space of a transmission device is solved, the structure is compact, production difficulty of the parts is lowered, and production cost is reduced. Moreover, by setting the engine, the first motor and the second motor, multi-gear design of a traditional transmission is omitted, the engine continuously drives the first motor to generate power, the first motor provides sufficient electric energy for the second motor, and by means of speed-adjustable drive by the second motor, the problems of short battery life and long charging time of electric vehicles are solved. The first synchronization mechanism is able to selectively abut against the first gear pair and the second gear pair, so as to convert the rotation of the second shaft into the rotation of the fourth shaft. Two gears are arranged to guarantee that the second motor in an optimal operation range, which is conducive to improvement of efficiency of the second motor.

In the hybrid drive system, whether the engine participates in drive at a high vehicle speed or does not participate in drive at a low vehicle speed, the engine is in a most economical operation mode, which greatly reduces fuel consumption and is economical. Moreover, the hybrid drive system may achieve switching among separate front wheel drive, separate rear wheel drive and four-wheel drive, which may achieve more fuel-saving modes due to various hybrid drive modes.

The present invention further provides a hybrid vehicle, which may achieve greater fuel consumption reduction, and avoid the problem of transmission performance and reliability caused by frequent gear shifting. The hybrid vehicle is longitudinally arranged on the complete vehicle, with adequate axial space, low difficulty in part design and production, large torque capacity, and better controllability.

In the description of the present invention, it should be understood that the orientation or positional relationships indicated by the terms "above", "below", "right" etc. are based on the orientation or positional relationship shown in the accompanying drawings and are merely for facilitating the description and simplifying the description, rather than indicating or implying that a device or element referred to must have a particular orientation or be constructed and operated in a particular orientation, and therefore will not be interpreted as limiting the present invention. In addition, the terms "first" and "second" are only used to distinguish in description and have no special meanings.

## Claims

1. A hybrid drive system, comprising:
an engine (90), a first shaft (1) and a second shaft (2), wherein a first end of the first shaft (1) is connected to the engine (90), and a second end of the first shaft is selectively connected to the second shaft (2);
a third shaft (3), wherein the third shaft (3), the second shaft (2) and the first shaft (1) are coaxially arranged;
a fourth shaft (4) and a fifth shaft (5), wherein the fourth shaft (4) is connected to the fifth shaft (5);
a sixth shaft (6), wherein the sixth shaft (6), the fourth shaft (4) and the second shaft (2) are arranged in parallel at intervals;
a first gear pair (10), a second gear pair (20) and a first synchronization mechanism (7), wherein the first gear pair (10) and the second gear pair (20) are located between the second shaft (2) and the fourth shaft (4), and the first synchronization mechanism (7) is configured to selectively abut against the first gear pair (10) and the second gear pair (20), so as to convert rotation of the second shaft (2) into rotation of the fourth shaft (4);
a third gear pair (30), a fourth gear pair (40), a second synchronization mechanism (9) and a third synchronization mechanism (8), wherein the third gear pair (30) is located between the fifth shaft (5) and the third shaft (3), the fourth gear pair (40) is located between the fifth shaft (5) and the sixth shaft (6), and the third synchronization mechanism (8) is configured to selectively abut against the fourth gear pair (40), so as to convert rotation of the fifth shaft (5) into rotation of the sixth shaft (6);
a first differential mechanism (61), a first drive shaft (62) and rear wheels (63), wherein the first differential mechanism (61) is connected to the third shaft (3), and the first differential mechanism (61) is configured to drive, by the first drive shaft (62), the rear wheels (63) to rotate;
a second differential mechanism (64), a second drive shaft (65) and front wheels (66), wherein the second differential mechanism (64) is connected to the sixth shaft (6), and the second differential mechanism (64) is configured to drive, by the second drive shaft (65), the front wheels (66) to rotate; and
a first motor (70) and a second motor (80), wherein the first motor (70) is connected to the second shaft (2), the second motor (80) is connected to the fifth shaft (5), the engine (90) drives, by the first shaft (1), the second shaft (2) to rotate for power generation by the first motor (70), and the first motor (70) is able to transfer stored electric energy to the second motor (80), so as to cause the second motor (80) to drive the fifth shaft (5) to rotate;
a clutch mechanism (60), wherein the clutch mechanism (60) comprises a driving portion (60a) and a driven portion (60b), the driving portion (60a) is connected to the first shaft (1), the driven portion (60b) is connected to the second shaft (2), and the driving portion (60a) and the driven portion (60b) are able to selectively abut against each other;
**characterized in that** the hybrid drive system has fifteen modes as follows: a vehicle front wheel engine drive and engine power generation mode, a vehicle rear wheel engine drive and engine power generation mode, a vehicle four-wheel engine drive and engine power generation mode, a vehicle front wheel all-electric drive and engine power generation mode, a vehicle rear wheel all-electric drive and engine power generation mode, a vehicle four-wheel all-electric drive and engine power generation mode, a vehicle front wheel all-electric drive and engine non-power-generation mode, a vehicle rear wheel all-electric drive and engine non-power-generation mode, a vehicle extrication mode, a vehicle four-wheel all-electric drive and engine non-power-generation mode, a vehicle front wheel hybrid drive and engine power generation mode, a vehicle rear wheel hybrid drive and engine power generation, a vehicle four-wheel hybrid drive and engine power generation mode, a vehicle backing and engine non-power-generation mode and a vehicle stationary and engine power generation mode;
the hybrid drive system further comprises a fifth gear pair (50), and the fifth gear pair (50) is located between the fifth shaft (5) and the third shaft (3), the second synchronization mechanism (9) is configured to selectively abut against the third gear pair (30) and the fifth gear pair (50), so as to convert rotation of the fifth shaft (5) into rotation of the third shaft (3);
wherein the fifth gear pair (50) comprises a fifth driving gear (50a) and a fifth driven gear (50b), the fifth shaft (5) penetrates the fifth driving gear (50a), the fifth driving gear (50a) meshes with the fifth driven gear (50b), the fifth driven gear (50b) sleeves the third shaft (3) and is able to rotate relative to the third shaft (3), and the second synchronization mechanism (9) is configured to selectively abut against the fifth driven gear (50b);
when the hybrid drive system is in the vehicle extrication mode, the engine (90) does not operate, the driving portion (60a) and the driven portion (60b) of the clutch mechanism (60) are disconnected from each other, and the first motor (70) does not generate power, drive force of the second motor (80) is transmitted to the third shaft (3) by the fifth gear pair (50), and the second synchronization mechanism (9) engages with the fifth driven gear (50b), and the drive force drives, by the first differential mechanism (61) and the first drive shaft (62), the rear wheels (63) to rotate, and therefore extricate a vehicle.

2. The hybrid drive system as claimed in claim 1, wherein the first gear pair (10) comprises a first driving gear (10a) and a first driven gear (10b), the second shaft (2) penetrates the first driving gear (10a), the first driving gear (10a) meshes with the first driven gear (10b), the first driven gear (10b) sleeves the fourth shaft (4) and is able to rotate relative to the fourth shaft (4), and the first synchronization mechanism (7) is configured to selectively abut against the first driven gear (10b).

3. The hybrid drive system as claimed in claim 2, wherein the second gear pair (20) comprises a second driving gear (20a) and a second driven gear (20b), the second shaft (2) penetrates the second driving gear (20a), the second driving gear (20a) meshes with the second driven gear (20b), the second driven gear (20b) sleeves the fourth shaft (4) and is able to rotate relative to the fourth shaft (4), and the first synchronization mechanism (7) is configured to selectively abut against the second driven gear (20b).

4. The hybrid drive system as claimed in claim 1, wherein the third gear pair (30) comprises a third driving gear and a third driven gear (30b), the fifth shaft (5) penetrates the third driving gear, the third driving gear meshes with the third driven gear (30b), the third driven gear (30b) sleeves the third shaft (3) and is able to rotate relative to the third shaft (3), and the second synchronization mechanism (9) is configured to selectively abut against the third driven gear (30b).

5. The hybrid drive system as claimed in claim 1, wherein the fourth gear pair (40) comprises a fourth driving gear and a fourth driven gear (40b), the fifth shaft (5) penetrates the fourth driving gear, the fourth driving gear meshes with the fourth driven gear (40b), the fourth driven gear (40b) sleeves the sixth shaft (6) and is able to rotate relative to the sixth shaft (6), and the third synchronization mechanism (8) is configured to selectively abut against the fourth driven gear (40b).

6. The hybrid drive system as claimed in claim 3, wherein the first synchronization mechanism (7) is arranged between the first driven gear (10b) and the second driven gear (20b).

7. The hybrid drive system as claimed in claim 1, wherein the second synchronization mechanism (9) is arranged between the third driven gear (30b) and the fifth driven gear (50b).

8. A hybrid vehicle, comprising the hybrid drive system as claimed in any one of claims 1-7.

## Patentansprüche

1. Hybridantriebssystem, umfassend:
einen Motor (90), eine erste Welle (1) und eine zweite Welle (2), wobei ein erstes Ende der ersten Welle (1) mit dem Motor (90) verbunden ist und ein zweites Ende der ersten Welle wahlweise mit der zweiten Welle (2) verbunden ist;
eine dritte Welle (3), wobei die dritte Welle (3), die zweite Welle (2) und die erste Welle (1) koaxial angeordnet sind;
eine vierte Welle (4) und eine fünfte Welle (5), wobei die vierte Welle (4) mit der fünften Welle (5) verbunden ist;
eine sechste Welle (6), wobei die sechste Welle (6), die vierte Welle (4) und die zweite Welle (2) in Abständen parallel angeordnet sind;
ein erstes Zahnradpaar (10), ein zweites Zahnradpaar (20) und einen ersten Synchronisationsmechanismus (7), wobei sich das erste Zahnradpaar (10) und das zweite Zahnradpaar (20) zwischen der zweiten Welle (2) und der vierten Welle (4) befinden, und der erste Synchronisationsmechanismus (7) so konfiguriert ist, dass er wahlweise am ersten Zahnradpaar (10) und am zweiten Zahnradpaar (20) anliegt, um die Drehung der zweiten Welle (2) in eine Drehung der vierten Welle (4) umzuwandeln;
ein drittes Zahnradpaar (30), ein viertes Zahnradpaar (40), einen zweiten Synchronisationsmechanismus (9) und einen dritten Synchronisationsmechanismus (8), wobei sich das dritte Zahnradpaar (30) zwischen der fünften Welle (5) und der dritten Welle (3) befindet, das vierte Zahnradpaar (40) zwischen der fünften Welle (5) und der sechsten Welle (6) angeordnet ist und der dritte Synchronisationsmechanismus (8) so konfiguriert ist, dass er selektiv an das vierte Zahnradpaar (40) anstößt, um die Drehung der fünften Welle (5) in eine Drehung der sechsten Welle (6) umzuwandeln;
einen ersten Differentialmechanismus (61), eine erste Antriebswelle (62) und Hinterräder (63), wobei der erste Differentialmechanismus (61) mit der dritten Welle (3) verbunden ist und der erste Differentialmechanismus (61) so konfiguriert ist, dass er die Hinterräder (63) über die erste Antriebswelle (62) in Drehung versetzt;
einen zweiten Differentialmechanismus (64), eine zweite Antriebswelle (65) und Vorderräder (66), wobei der zweite Differentialmechanismus (64) mit der sechsten Welle (6) verbunden ist und der zweite Differentialmechanismus (64) so konfiguriert ist, dass er die Vorderräder (66) über die zweite Antriebswelle (65) in Drehung versetzt; und
einen ersten Motor (70) und einen zweiten Motor (80), wobei der erste Motor (70) mit der zweiten Welle (2) verbunden ist, der zweite Motor (80) mit der fünften Welle (5) verbunden ist, der Motor (90) über die erste Welle (1) die zweite Welle (2) treibt, um durch den ersten Motor (70) Strom zu erzeugen, und der erste Motor (70) in der Lage ist, gespeicherte elektrische Energie auf den zweiten Motor (80) zu übertragen, um den zweiten Motor (80) dazu zu veranlassen, die fünfte Welle (5) zu drehen;
einen Kupplungsmechanismus (60), wobei der Kupplungsmechanismus (60) einen Antriebsabschnitt (60a) und einen angetriebenen Abschnitt (60b) umfasst, wobei der Antriebsabschnitt (60a) mit der ersten Welle (1) verbunden ist, der angetriebene Abschnitt (60b) mit der zweiten Welle (2) verbunden ist und der Antriebsabschnitt (60a) und der angetriebene Abschnitt (60b) selektiv aneinander anliegen können;
**dadurch gekennzeichnet, dass** das Hybridantriebssystem über fünfzehn Modi verfügt, wie folgt: einen Antriebs- und Stromerzeugungsmodus für die Vorderräder des Fahrzeugs, einen Antriebs- und Stromerzeugungsmodus für die Hinterräder des Fahrzeugs, einen Antriebs- und Stromerzeugungsmodus für alle vier Räder des Fahrzeugs, einen vollelektrischen Antriebs- und Stromerzeugungsmodus für die Vorderräder des Fahrzeugs, einen vollelektrischen Antriebs- und Stromerzeugungsmodus für die Hinterräder des Fahrzeugs, einen vollelektrischen Antriebs- und Stromerzeugungsmodus für alle vier Räder des Fahrzeugs, einen vollelektrischen Antriebs- und Nicht-Stromerzeugungsmodus für die Vorderräder des Fahrzeugs, ein vollelektrisches Hinterradantrieb und einen Motor mit Nicht-Stromerzeugung, einen Fahrzeugbergungsmodus, einen vollelektrischen Allradantrieb und einen Motor mit Nicht-Stromerzeugung, einen Hybridantrieb an den Vorderrädern und einen Motor mit Stromerzeugung, einen Hybridantrieb an den Hinterrädern und einen Motor mit Stromerzeugung, einen Hybridantrieb an allen Rädern und einen Motor mit Stromerzeugung, einen Rückwärtsgang und einen Motor mit Nicht-Stromerzeugung sowie einen Standmodus und einen Motor mit Stromerzeugung;
das Hybridantriebssystem ferner ein fünftes Zahnradpaar (50) umfasst, und das fünfte Zahnradpaar (50) zwischen der fünften Welle (5) und der dritten Welle (3) angeordnet ist, der zweite Synchronisationsmechanismus (9) so konfiguriert ist, dass er selektiv am dritten Zahnradpaar (30) und am fünften Zahnradpaar (50) anliegt, um die Drehung der fünften Welle (5) in eine Drehung der dritten Welle (3) umzuwandeln;
wobei das fünfte Zahnradpaar (50) ein fünftes Antriebszahnrad (50a) und ein fünftes angetriebenes Zahnrad (50b) umfasst, die fünfte Welle (5) das fünfte Antriebszahnrad (50a) durchdringt, das fünfte Antriebszahnrad (50a) mit dem fünften angetriebenen Zahnrad (50b) kämmt, das fünfte angetriebene Zahnrad (50b) die dritte Welle (3) umhüllt und eine Drehung relativ zur dritten Welle (3) durchführen kann, und der zweite Synchronisationsmechanismus (9) so konfiguriert ist, dass er selektiv am fünften angetriebenen Zahnrad (50b) anliegt;
wenn sich das Hybridantriebssystem im Fahrzeugbergungsmodus befindet, arbeitet der Motor (90) nicht, der Antriebsabschnitt (60a) und der angetriebene Abschnitt (60b) des Kupplungsmechanismus (60) sind voneinander getrennt, und der erste Motor (70) erzeugt keine Leistung, die Antriebskraft des zweiten Motors (80) wird durch das fünfte Zahnradpaar (50) auf die dritte Welle (3) übertragen und der zweite Synchronisationsmechanismus (9) greift in das fünfte angetriebene Zahnrad (50b) ein, und die Antriebskraft treibt über den ersten Differentialmechanismus (61) und die erste Antriebswelle (62) die Hinterräder (63) an, zu einer Drehung zu kommen, und befreit so ein Fahrzeug.

2. Hybridantriebssystem nach Anspruch 1, wobei das erste Zahnradpaar (10) ein erstes Antriebszahnrad (10a) und ein erstes angetriebenes Zahnrad (10b) umfasst, die zweite Welle (2) das erste Antriebszahnrad (10a) durchdringt, das erste Antriebszahnrad (10a) mit dem ersten angetriebenen Zahnrad (10b) kämmt, das erste angetriebene Zahnrad (10b) die vierte Welle (4) umhüllt und eine Drehung relativ zur vierten Welle (4) durchführen kann und der erste Synchronisationsmechanismus (7) so konfiguriert ist, dass er selektiv am ersten angetriebenen Zahnrad (10b) anliegt.

3. Hybridantriebssystem nach Anspruch 2, wobei das zweite Zahnradpaar (20) ein zweites Antriebszahnrad (20a) und ein zweites angetriebenes Zahnrad (20b) umfasst, die zweite Welle (2) das zweite Antriebszahnrad (20a) durchdringt, das zweite Antriebszahnrad (20a) mit dem zweiten angetriebenen Zahnrad (20b) kämmt, das zweite angetriebene Zahnrad (20b) die vierte Welle (4) umhüllt und eine Drehung relativ zur vierten Welle (4) durchführen kann, und der erste Synchronisationsmechanismus (7) so konfiguriert ist, dass er selektiv am zweiten angetriebenen Zahnrad (20b) anliegt.

4. Hybridantriebssystem nach Anspruch 1, wobei das dritte Zahnradpaar (30) ein drittes Antriebszahnrad und ein drittes angetriebenes Zahnrad (30b) umfasst, die fünfte Welle (5) das dritte Antriebszahnrad durchdringt, das dritte Antriebszahnrad mit dem dritten angetriebenen Zahnrad (30b) kämmt, das dritte angetriebene Zahnrad (30b) die dritte Welle (3) umhüllt und eine Drehung relativ zur dritten Welle (3) durchführen kann, und der zweite Synchronisationsmechanismus (9) so konfiguriert ist, dass er selektiv am dritten angetriebenen Zahnrad (30b) anliegt.

5. Hybridantriebssystem nahc Anspruch 1, wobei das vierte Zahnradpaar (40) ein viertes Antriebszahnrad und ein viertes angetriebenes Zahnrad (40b) umfasst, die fünfte Welle (5) das vierte Antriebszahnrad durchdringt, das vierte Antriebszahnrad mit dem vierten angetriebenen Zahnrad (40b) kämmt, das vierte angetriebene Zahnrad (40b) die sechste Welle (6) umhüllt und eine Drehung relativ zur sechsten Welle (6) durchführen kann, und der dritte Synchronisationsmechanismus (8) so konfiguriert ist, dass er selektiv am vierten angetriebenen Zahnrad (40b) anliegt.

6. Hybridantriebssystem nach Anspruch 3, wobei der erste Synchronisationsmechanismus (7) zwischen dem ersten angetriebenen Zahnrad (10b) und dem zweiten angetriebenen Zahnrad (20b) angeordnet ist.

7. Hybridantriebssystem nach Anspruch 1, wobei der zweite Synchronisationsmechanismus (9) zwischen dem dritten angetriebenen Zahnrad (30b) und dem fünften angetriebenen Zahnrad (50b) angeordnet ist.

8. Hybridfahrzeug, umfassend das in einem der Ansprüche 1-7 beanspruchte Hybridantriebssystem.

## Revendications

1. Système d'entraînement hybride, comprenant :
un moteur (90), un premier arbre (1) et un deuxième arbre (2), dans lequel une première extrémité du premier arbre (1) est reliée au moteur (90), et une seconde extrémité du premier arbre est sélectivement reliée au deuxième arbre (2) ;
un troisième arbre (3), dans lequel le troisième arbre (3), le deuxième arbre (2) et le premier arbre (1) sont disposés coaxialement ;
un quatrième arbre (4) et un cinquième arbre (5), dans lequel le quatrième arbre (4) est relié au cinquième arbre (5) ;
un sixième arbre (6), dans lequel le sixième arbre (6), le quatrième arbre (4) et le deuxième arbre (2) sont disposés en parallèle à intervalles ;
une première paire d'engrenages (10), une deuxième paire d'engrenages (20) et un premier mécanisme de synchronisation (7), dans lequel la première paire d'engrenages (10) et la deuxième paire d'engrenages (20) sont situées entre le deuxième arbre (2) et le quatrième arbre (4), et le premier mécanisme de synchronisation (7) est conçu pour venir sélectivement en butée contre la première paire d'engrenages (10) et la deuxième paire d'engrenages (20), de manière à convertir la rotation du deuxième arbre (2) en rotation du quatrième arbre (4) ;
une troisième paire d'engrenages (30), une quatrième paire d'engrenages (40), un deuxième mécanisme de synchronisation (9) et un troisième mécanisme de synchronisation (8), dans lequel la troisième paire d'engrenages (30) est située entre le cinquième arbre (5) et le troisième arbre (3), la quatrième paire d'engrenages (40) est située entre le cinquième arbre (5) et le sixième arbre (6), et le troisième mécanisme de synchronisation (8) est conçu pour venir sélectivement en butée contre la quatrième paire d'engrenages (40), de manière à convertir la rotation du cinquième arbre (5) en rotation du sixième arbre (6) ;
un premier mécanisme différentiel (61), un premier arbre d'entraînement (62) et des roues arrière (63), dans lequel le premier mécanisme différentiel (61) est relié au troisième arbre (3), et le premier mécanisme différentiel (61) est conçu pour entraîner, par le premier arbre d'entraînement (62), la rotation des roues arrière (63) ;
un second mécanisme différentiel (64), un second arbre d'entraînement (65) et des roues avant (66), dans lequel le second mécanisme différentiel (64) est relié au sixième arbre (6) et le second mécanisme différentiel (64) est conçu pour entraîner, par le second arbre d'entraînement (65), la rotation des roues avant (66) ; et
un premier moteur (70) et un second moteur (80), dans lequel le premier moteur (70) est relié au deuxième arbre (2), le second moteur (80) est relié au cinquième arbre (5), le moteur (90) entraîne, par le premier arbre (1), la rotation du deuxième arbre (2) pour la production d'énergie par le premier moteur (70), et le premier moteur (70) est capable de transférer l'énergie électrique stockée au second moteur (80), de manière à amener le second moteur (80) à entraîner la rotation du cinquième arbre (5) ;
un mécanisme d'embrayage (60), dans lequel le mécanisme d'embrayage (60) comprend une partie d'entraînement (60a) et une partie entraînée (60b), la partie d'entraînement (60a) est reliée au premier arbre (1), la partie entraînée (60b) est reliée au deuxième arbre (2), et la partie d'entraînement (60a) et la partie entraînée (60b) sont capables de venir sélectivement en butée l'une contre l'autre ;
**caractérisé en ce que** le système d'entraînement hybride a quinze modes comme suit : un mode d'entraînement par moteur sur roues avant du véhicule et de production d'énergie par moteur, un mode d'entraînement par moteur sur roues arrière du véhicule et de production d'énergie par moteur, un mode d'entraînement par moteur sur quatre roues du véhicule et de production d'énergie par moteur, un mode d'entraînement entièrement électrique sur roues avant du véhicule et de production d'énergie par moteur, un mode d'entraînement entièrement électrique sur roues arrière du véhicule et de production d'énergie par moteur, un mode d'entraînement entièrement électrique sur quatre roues du véhicule et de production d'énergie par moteur, un mode d'entraînement entièrement électrique sur roues avant du véhicule et de non production d'énergie par moteur, un mode d'entraînement entièrement électrique sur roues arrière du véhicule et de non production d'énergie par moteur, un mode de dégagement du véhicule, un mode d'entraînement entièrement électrique sur quatre roues du véhicule et de non production d'énergie par moteur, un mode d'entraînement hybride sur roues avant du véhicule et de production d'énergie par moteur, un mode d'entraînement hybride sur roues arrière du véhicule et de production d'énergie par moteur, un mode d'entraînement hybride sur quatre roues du véhicule et de production d'énergie par moteur, un mode de marche arrière du véhicule et de non production d'énergie par moteur et un mode de stationnement du véhicule et de production d'énergie par moteur ;
le système d'entraînement hybride comprend en outre une cinquième paire d'engrenages (50), et la cinquième paire d'engrenages (50) est située entre le cinquième arbre (5) et le troisième arbre (3), le deuxième mécanisme de synchronisation (9) est conçu pour venir sélectivement en butée contre la troisième paire d'engrenages (30) et la cinquième paire d'engrenages (50), de manière à convertir la rotation du cinquième arbre (5) en rotation du troisième arbre (3) ;
dans lequel la cinquième paire d'engrenages (50) comprend un cinquième engrenage d'entraînement (50a) et un cinquième engrenage entraîné (50b), le cinquième arbre (5) pénètre dans le cinquième engrenage d'entraînement (50a), le cinquième engrenage d'entraînement (50a) s'engrène avec le cinquième engrenage entraîné (50b), le cinquième engrenage entraîné (50b) manchonne le troisième arbre (3) et est capable de tourner par rapport au troisième arbre (3), et le deuxième mécanisme de synchronisation (9) est conçu pour venir sélectivement en butée contre le cinquième engrenage entraîné (50b) ;
lorsque le système d'entraînement hybride est en mode de dégagement du véhicule, le moteur (90) ne fonctionne pas, la partie d'entraînement (60a) et la partie entraînée (60b) du mécanisme d'embrayage (60) sont déconnectées l'une de l'autre, et le premier moteur (70) ne produit pas d'énergie, la force d'entraînement du second moteur (80) est transmise au troisième arbre (3) par la cinquième paire d'engrenages (50), et le deuxième mécanisme de synchronisation (9) se met en prise avec le cinquième engrenage entraîné (50b), et la force d'entraînement entraîne, par le premier mécanisme différentiel (61) et le premier arbre d'entraînement (62), la rotation des roues arrière (63), et donc le dégagement d'un véhicule.

2. Système d'entraînement hybride selon la revendication 1, dans lequel la première paire d'engrenages (10) comprend un premier engrenage d'entraînement (10a) et un premier engrenage entraîné (10b), le deuxième arbre (2) pénètre dans le premier engrenage d'entraînement (10a), le premier engrenage d'entraînement (10a) s'engrène avec le premier engrenage entraîné (10b), le premier engrenage entraîné (10b) manchonne le quatrième arbre (4) et est capable de tourner par rapport au quatrième arbre (4), et le premier mécanisme de synchronisation (7) est conçu pour venir sélectivement en butée contre le premier engrenage entraîné (10b).

3. Système d'entraînement hybride selon la revendication 2, dans lequel la deuxième paire d'engrenages (20) comprend un deuxième engrenage d'entraînement (20a) et un deuxième engrenage entraîné (20b), le deuxième arbre (2) pénètre dans le deuxième engrenage d'entraînement (20a), le deuxième engrenage d'entraînement (20a) s'engrène avec le deuxième engrenage entraîné (20b), le deuxième engrenage entraîné (20b) manchonne le quatrième arbre (4) et est capable de tourner par rapport au quatrième arbre (4), et le premier mécanisme de synchronisation (7) est conçu pour venir sélectivement en butée contre le deuxième engrenage entraîné (20b).

4. Système d'entraînement hybride selon la revendication 1, dans lequel la troisième paire d'engrenages (30) comprend un troisième engrenage d'entraînement et un troisième engrenage entraîné (30b), le cinquième arbre (5) pénètre dans le troisième engrenage d'entraînement, le troisième engrenage d'entraînement s'engrène avec le troisième engrenage entraîné (30b), le troisième engrenage entraîné (30b) manchonne le troisième arbre (3) et est capable de tourner par rapport au troisième arbre (3), et le deuxième mécanisme de synchronisation (9) est conçu pour venir sélectivement en butée contre le troisième engrenage entraîné (30b).

5. Système d'entraînement hybride selon la revendication 1, dans lequel la quatrième paire d'engrenages (40) comprend un quatrième engrenage d'entraînement et un quatrième engrenage entraîné (40b), le cinquième arbre (5) pénètre dans le quatrième engrenage d'entraînement, le quatrième engrenage d'entraînement s'engrène avec le quatrième engrenage entraîné (40b), le quatrième engrenage entraîné (40b) manchonne le sixième arbre (6) et est capable de tourner par rapport au sixième arbre (6), et le troisième mécanisme de synchronisation (8) est conçu pour venir sélectivement en butée contre le quatrième engrenage entraîné (40b) .

6. Système d'entraînement hybride selon la revendication 3, dans lequel le premier mécanisme de synchronisation (7) est disposé entre le premier engrenage entraîné (10b) et le deuxième engrenage entraîné (20b) .

7. Système d'entraînement hybride selon la revendication 1, dans lequel le deuxième mécanisme de synchronisation (9) est disposé entre le troisième engrenage entraîné (30b) et le cinquième engrenage entraîné (50b).

8. Véhicule hybride, comprenant le système d'entraînement hybride selon l'une quelconque des revendications 1 à 7.
